# EUROPÄISCHE PATENTANMELDUNG

(11) **EP 1 407 880 A1**
(43) Veröffentlichungstag der Anmeldung: **14.04.2004**
(21) Anmeldenummer: 02405866.1
(22) Anmeldetag: 07.10.2002
(51) Int. Cl.: B32B 31/12, G03G 8/00

(54) **Verfahren und Vorrichtung zur Herstellung eines mehrschichtigen Folien-Verbundes für Verpackungsmaterialen**

(71) Anmelder: Alcan Technology & Management Ltd., 8212 Neuhausen am Rheinfall (CH)
(72) Erfinder: Nägeli, Hans Rudolf, 8212 Neuhausen (CH); Frey, Juerg, 9014 St. Gallen (CH)

(57) **Zusammenfassung**

Die Erfindung betrifft ein Verfahren zur Herstellung eines flexiblen Folienverbundes (7) aus zwei oder mehreren Folien (9a,9b) für Verpackungsmaterialen, wobei wenigstens zwei Folien (9a,9b) gegenseitig zu einem Folienverbund kaschiert werden und die Folien oder der Folienverbund bedruckt und wenigstens eine freiliegende Oberfläche des Folienverbundes mit einer Siegellackbeschichtung (14) versehen wird. Die Erfindung zeichnet sich dadurch aus, dass die Kaschierung (16), die Bedruckung (12) und die Siegellackbeschichtung (14) der Folien oder des Folienverbundes inline an einzelnen Beschichtungsstationen (1, 2, 4) einer Produktionsvorrichtung (10) mittels eines elektrostatischen Beschichtungsverfahrens erfolgt, wobei Beschichtungsteilchen elektrostatisch geladen und mittels Transfermitteln durch Anlegen eines elektrischen Feldes auf die zu beschichtende Folienoberfläche übertragen und zu einem Beschichtungsfilm aufgeschmolzen und/oder gehärtet werden.

## Beschreibung

Vorliegende Erfindung betrifft ein Verfahren zur Herstellung eines Verpackungsmaterials aus einem flexiblen, mehrschichtigen Folienverbund, enthaltend die Verfahrensschritte: Herstellung des Folienverbundes aus mehreren Folien oder Schichten mittels eines Kaschier- und/oder Extrusionsprozesses, Bedruckung der Folien oder des Folienverbundes sowie Beschichtung wenigstens einer freiliegenden Oberfläche des Folienverbundes mit einem Siegellack. Die Erfindung betrifft ferner eine Vorrichtung zur Herstellung des Folienverbundes und die Verwendung des Folienverbundes.

Die Herstellung von Folienverbunden mit Bedruckung und Siegelschichten geschieht heute in der Regel in mehreren voneinander getrennten Verfahrensschritten und Vorrichtungen.

Die Folien werden beispielsweise in einem Kaschierwerk zu einem Folienverbund zusammengeführt. Der Klebstoff wird in der Regel mittels eines Walzauftragverfahrens auf die Folien aufgetragen und die Folien anschliessend zu einem Folienverbund kaschiert. In einem nachfolgenden Verfahrensschritt wird der Folienverbund in einer Druckanlage bedruckt. Die Bedruckung erfolgt beispielsweise mittels Tiefdruck oder Offset-Druck. Enthält der Folienverbund einen Konterdruck, so werden die Folien bereits vor dem Kaschiervorgang in einer Druckanlage mit einem Konterdruck versehen.

Der bedruckte Folienverbund wird nachfolgend in einer Lackieranlage mit Lackschichten versehen, welche beispielsweise Drucküberlacke oder Siegelschichten sein können. Der Lackauftrag geschieht beispielsweise mittels Walzbeschichtung, Tauchbeschichtung oder Düsenbeschichtung.

Die Folien werden zur Ausführung der Beschichtungen jeweils von Coils, d.h. Folienrollen, abgehaspelt und nach Abschluss dieser Verfahrensschritte wieder aufgehaspelt und der weiteren Verarbeitung zugeführt. Unter Umständen müssen die Folien zur Ausführung der oben genannten Verfahrensschritte mehrmals ab- und aufgehaspelt und zwischendurch für die weiteren Verarbeitungsschritte räumlich verschoben werden.

Die Herstellung eines bedruckten und Lackbeschichteten Folienverbundes in einzelnen getrennten Verfahrensschritten unter Anwendung verschiedener Beschichtungs- bzw. Auftragungs-Technologien ist sehr aufwendig und zeitintensiv.

Aufgabe vorliegender Erfindung ist es daher, ein Herstellungsverfahren sowie eine Vorrichtung vorzuschlagen, bei welchem die oben genannten Nachteile vermieden werden können.

Die Aufgabe wird dadurch gelöst, dass der Kaschierprozess und/oder der Extrusionsprozess, die Bedruckung und die Siegellackbeschichtung inline an einzelnen Stationen einer gemeinsamen Produktionsvorrichtung erfolgen, wobei die Bedrukkung und die Siegellackbeschichtung an Beschichtungsstationen mittels eines elektrostatischen Beschichtungsverfahrens erfolgen, in welchem Beschichtungsteilchen elektrostatisch geladen und mittels Transfermitteln durch Anlegen eines elektrischen Feldes auf die zu beschichtende Folienoberfläche übertragen und zu einem Beschichtungsfilm aufgeschmolzen und/oder gehärtet werden.

Der Folienverbund wird bevorzugt aus zwei oder mehreren Folien hergestellt, wobei wenigstens zwei Folien gegenseitig zu einem Folienverbund kaschiert werden und die Kaschierung an einer Kaschierstation der Produktionsvorrichtung mittels eines elektrostatischen Beschichtungsverfahrens erfolgt, in welchem Beschichtungsteilchen elektrostatisch geladen und mittels Transfermitteln durch Anlegen eines elektrischen Feldes auf die zu beschichtende Folienoberfläche übertragen und zu einem, eine Klebstoffschicht ausbildenden Beschichtungsfilm aufgeschmolzen und/oder gehärtet werden.

Die Siegellackbeschichtung ist ein Kaltsiegel- und besonders bevorzugt ein Heisssiegellack.

Die Härtung der Beschichtungen ist bei chemisch vernetzenden Beschichtungssystemen von Bedeutung. Bei Beschichtungsmaterialien aus thermoplastischen Kunststoff (z.B. Schmelzkleber, Hotmelts) ist keine Härtung im üblichen Sinnen notwendig.

Bei Verwendung von aushärtenden Beschichtungssystemen kann die Härtung der mittels eines elektrostatischen Beschichtungsverfahren auf die Folie bzw. den Folienverbund aufgebrachten Klebstoffschicht/Klebstoffschichten, der Bedrukkung/Bedruckungen, der Drucküberlackschicht und/oder der Siegellackschicht in Härtungseinheiten der dazugehörigen Beschichtungsstationen erfolgen.

In bevorzugter Ausführung erfolgt die Härtung der vorgenannten Beschichtungen inline an einer gemeinsamen, den Beschichtungsstationen nachgeordneten Härtungsstation der Produktionsvorrichtung.

Die Beschichtungsteilchen bzw. die Beschichtungen können bsp. mittels Strahlung, insbesondere mittels UV-Strahlung (Ultraviolett-Strahlung) oder EB-Strahlung (Elektronen-Strahlung; Electron Beam) härtende Beschichtungs-Systeme sein. Die Verwendung von UV- oder EB-härtenden Beschichtungen mittels elektrostatischen Beschichtungsverfahren ermöglicht der Einsatz lösungsmittelfreier Beschichtungs-Systeme.

Bei der erfindungsgemässen Anwendung Strahlungs-härtender Beschichtungs-Systemen ist das fallweise notwendige Aufschmelzen und Formieren der Beschichtungsteilchen auf dem Substrat im Gegensatz zu thermisch härtenden Beschichtungssystemen vom eigentlichen Härtungsprozess entkoppelt.

Die Strahlungs-härtende Beschichtungs-Systeme, wie UV-härtende oder EBhärtende Beschichtungssysteme, enthalten sogenannte Initiatoren, z.B. Photoinitiatoren in UV-härtenden Beschichtungsteilchen, welche bei entsprechendem Energiebeschuss z.B. mit UV- oder Elektronenstrahlung aktiviert werden und eine sofortige Polymerisierung der Beschichtung bewirken.

Die Beschichtungs-Partikel werden in bevorzugter Ausführung der Erfindung nach dem Übertrag auf das Substrat (Kunststofffolie) in einer sogenannten Heiz-Einheit z.B. mittels IR- (Infrarot) Strahlung oder NIR- (nahes Infrarot) Strahlung, insbesondere mittels beheizten Walzen, auf z.B. 70 - 80°C, erwärmt und aufgeschmolzen. Durch das Aufschmelzen wird ein feiner gleichmässiger, auf dem Substrat haftender Film ausgebildet. Die Heizeinheit ist hierzu jeweils den einzelnen Beschichtungsstationen zugeordnet.

Nach der Übertragung der Beschichtungspartikel und gegebenenfalls nach Erwärmen bzw. Aufschmelzen der Beschichtung zu einem feinen Film, folgt bei Strahlungs-härtenden Beschichtungssystemen in einer nachgeordneten Härtungs-Station die Fixierung des Aufschmelzproduktes auf das Substrat. Die den Härtungsprozess bewirkenden Verkettungsreaktionen werden, wie bereits erwähnt, bevorzugt mittels Ultraviolett- oder Elektronen-Strahlung ausgelöst.

Die Beschichtungsteilchen bzw. die Beschichtungen, insbesondere Heisssiegellackbeschichtungen, Bedruckung oder Klebstoffbeschichtungen, können jedoch auch auf thermoplastischen Kunststoffen basieren, wodurch eine Härtung im eigentlichen Sinne entfällt. Die Beschichtungsteilchen werden vielmehr nach der Übertragung vom Transfermedium auf das Substrat wie oben beschrieben zu einem Beschichtungsfilm aufgeschmolzen und unter Abkühlung verfestigt.

Die Produktionsvorrichtung enthält bevorzugt Mittel zur elektronischen Datenverarbeitung, welche den gezielten, teilflächigen Auftrag der Bedruckung, der Drucküberlack- und/oder der Siegellackbeschichtung erlauben. Der teilflächige Auftrag der Bedruckung erfolgt hierbei unter Ausbildung eines Druckbildes.

Die Produktionsvorrichtung kann ferner Mittel zur elektronischen Datenverarbeitung enthalten, mittels welchen an den einzelnen Beschichtungsstationen die aufzutragenden Schichtdicken überwacht und/oder gesteuert werden können. Die genannten Mittel werden bevorzugt bei der fallweise vorhandenen Kaschierstation, der Drucküberlackstation und/oder der Siegellackstation eingesetzt. Die Steuerung der aufzutragenden Schichtdicken bzw. des teilflächigen Schichtauftrages geschieht bevorzugt mittels Digitaldrucktechnik.

Die Beschichtungsteilchen zur Erzeugung der Kaschier- bzw. Klebstoffschicht können Flüssig- oder Trockenteilchen sein. Sie liegen bevorzugt in fester Form, z.B. pulverförmig, vor. Die Beschichtungsteilchen können beispielsweise Teil eines Zweikomponenten-Entwicklersystems mit einem Carrier sein. Die Beschichtungsteilchen können auch Teil eines Einkomponenten-Entwicklersystems sein. Die Beschichtung erfolgt vorzugsweise vollfächig.

Die Beschichtungsteilchen der Druckstation sind bevorzugt Trocken- oder Flüssig-Tonerteilchen. Der Toner kann beispielsweise ein Zweikomponenten-Trockentoner bzw. Zweikomponenten-Entwicklersystem mit einem Carrier sein. Der Toner kann auch ein Einkomponenten-Toner sein.

Das Druckbild besteht zweckmässig aus Bild- und/oder Zeichenmustern, welche beispielsweise Zeichenfolgen, Abbildungen, Muster, Raster, Zufallsmuster enthalten. Das Bild- und/oder Zeichenmuster kann z.B. in Farbe, Schwarz, Weiss oder Grautönen vorliegen.

Das Bild- und/oder Zeichenmuster basiert zweckmässig auf einer Druckvorlage. Die Daten der Druckvorlage liegen vorzugsweise als Digitalgrössen vor und werden beispielsweise mittels Desktop-Publishing, d.h. mittels Programmen zur Bild- und Textverarbeitung oder dergl. unter Verwendung von Anlagen zur Elektronischen Datenverarbeitung (EDV) erzeugt oder überarbeitet.

Die Daten können beispielsweise auf einem magnetischen, magneto-optischen oder optischen Speichermedium gespeichert sein. Es ist auch möglich, in Form von Analogdaten vorliegende Druckvorlagen unter Einsatz entsprechender Mittel, wie EDV-Anlagen und Datenverarbeitungsprogramme (z.B. Scanner-Geräte), elektronisch zu erfassen und mittels eines Analog-Digital-Umsetzers in Digitalsignale umzuwandeln und weiterzuverarbeiten. Die als digitale Grössen vorliegende Daten der Druckvorlagen werden zweckmässig über ein elektrophotographisches Verfahren auf die Verpackungsmaterialien reproduziert.

Farbige Bild- und/oder Zeichenmuster werden zweckmässig durch mehrmalige, hintereinander in verschiedenen Druckeinheiten der Druckstation durchgeführte Druckvorgänge erzeugt, wobei z.B. bei jedem Druckvorgang ein Toner mit einer entsprechenden Pigmentierung verwendet wird.

Weiters können zwei oder mehrere Druckvorlagen z.B. über Text- und/oder Bildbearbeitungsprogramme mittels EDV zu einem vollständigen Bild- und/oder Zeichenmuster verarbeitet werden. Neben einer Druckvorlage kann beispielsweise eine kontinuierlich, für jede zu bedruckende Fläche wechselnde, oder in anderer Sequenz wechselnde, weitere Druckvorlage einkopiert werden, wobei unter einkopieren bzw. kopieren die Reproduktion einer zweckmässig in elektronischer Datenform vorliegende Druckvorlage zu verstehen ist. Dies ermöglicht, beispielsweise Seriennummern, Druckmuster- oder farbunterschiedliche Verpackungsmaterialien für Einzelverpackungen und dergl., in einem Arbeitsgang zu fertigen. Eine Druckvorlage kann ein- und/oder mehrfach reproduziert werden.

Die Druckvorlagen können durch digitale Aufbereitung unter Verwendung entsprechender Datenverarbeitungsprogramme mit Hilfe von EDV beinahe uneingeschränkt bearbeitet und geändert werden.

Das der Foliendurchlaufanlage rollenförmig angelieferte Verpackungsmaterial kann auch einen mittels eines der vorgenannten klassischen Druckverfahren hergestellten Vordruck oder Basisdruck enthalten.

Die Beschichtungsteilchen zur Erzeugung einer Drucküberlack- und/oder Siegellackbeschichtung können als Flüssig- oder Trockenteilchen vorliegen. Sie liegen bevorzugt in fester Form, z.B. pulverförmig bzw. als Pulverlack vor. Drucküberlacke und insbesondere Heisssiegellacke liegen bevorzugt als Pulverlacke vor, wobei der Heisssiegellack besonders bevorzugt ein schmelzfähiger Thermoplast-Kunststoff ist. Der Kaltsiegellack wird bevorzugt in Form von Flüssigteilchen aufgebracht.

Die Beschichtungsteilchen können beispielsweise Teil eines Zweikomponenten-Entwicklersystems mit einem Carrier sein. Die Beschichtungsteilchen können auch Teil eines Einkomponenten-Entwicklersystems sein. Die Beschichtungsteilchen sind bevorzugt pigmentfrei oder solcherart pigmentiert, dass die daraus erzeugte Lackschicht wenigstens durchscheinend ist und eine darunter liegende Bedruckung sichtbar bleibt.

Der Folienverbund kann lediglich eine Siegellackbeschichtung oder sowohl eine Drucküberlack-, auch Schutzlack genannt, als auch eine Siegellackbeschichtung aufweisen. Der Folienverbund kann z.B. auf der zu siegelnden Seite eine Siegellackbeschichtung und auf der gegenüber liegenden freien Seite eine Bedruckung und darauf angeordnet einen Drucküberlack aufweisen. Der Folienverbund kann ferner auf derselben freien Seite sowohl eine teilflächige Siegellackbeschichtung im Bereich der Siegelflächen als auch einen teilflächigen Drucküberlack im Bereich der Druckbilder in Kombination aufweisen. Ferner kann die Siegelschicht auch auf der freien Oberfläche des Drucküberlackes angeordnet sein.

Die Siegellackbeschichtung ist bevorzugt gezielt teilflächig im Bereich der Siegelflächen aufgetragen. Die Drucküberlackbeschichtung ist vorzugsweise gezielt teilflächig im Bereich des Druckbildes aufgetragen. Der Drucküberlack ist zweckmässig durchscheinend bzw. teilweise oder vollständig transparent. Die Dicke der Siegellack- bzw. der Drucküberlackbeschichtung kann 7 - 100 µm und insbesondere 10 - 50 µm betragen.

Die Drucküberlack- und/oder Siegellackbeschichtung werden zweckmässig durch den Einsatz von elektronischen Datenverarbeitungsmitteln, wie Bildverarbeitungsmitteln, unter Ausbildung eines Bildmusters teilflächig auf die Folien aufgetragen.

Das Bildmuster basiert zweckmässig auf einer Druckvorlage. Die Daten der Druckvorlage liegen vorzugsweise als Digitalgrössen vor. Die Aufbereitung, Bearbeitung und das Speichern des Bildmusters kann analog den Bild- und Zeichenmuster von Druckvorlagen zur Erzeugung einer Bedruckung geschehen. Die dazugehörige vorangehende Offenbarung trifft entsprechend auch auf Bildmuster für teilflächige Drucküberlack- bzw Siegellackbeschichtungen zu. Die Bildmuster werden hierbei ebenfalls bevorzugt mittels eines elektrophotographischen Verfahrens erzeugt.

Auf Basis eines Strahlungs-härtenden, wie z.B. UV- oder EB-härtenden, Beschichtungssystem aufgebrachte Drucküberlacke weisen eine ausgezeichnete Haftung auf dem Substrat und der Bedruckung auf. Der Drucküberlack ist vorzugsweise erst ab einer Temperatur von 200°C und mehr wieder aufschmelzbar und bleibt bei einer durch Heisssiegelung oder Sterilisation erfolgten Erwärmung des Verpakkungsmaterials stabil, so dass die darunter liegende Bedruckung vor Beschädigung geschützt ist.

In Ausführung des Verfahrens werden wenigstens zwei Folien oder Folienverbunde von einer Rolle abgewickelt und der Kaschierstation der Produktionsvorrichtung zugeführt. In der Kaschierstation wird eine oder beide zu kaschierende freie Oberfläche der Folien oder Folienverbunde mittels eines elektrostatischen Beschichtungsverfahrens mit einem Klebstoff beschichtet. Der Klebstoff wird vorzugsweise an einer der Beschichtungseinheit nachgeordneten Heiz-Einheit zu einem Klebstofffilm aufgeschmolzen und gegebenenfalls gehärtet. Anschliessend werden die Folien zu einem Folienverbund zusammengeführt und miteinander verklebt, wobei die Klebstoffschicht unter Abkühlung verfestigt wird.

Es ist denkbar, dass der produzierte Folienverbund noch mit einer oder mehreren weiteren Folien oder Folienverbunden in einer oder mehreren weiteren Kaschierstationen kaschiert wird. Ferner ist auch denkbar das anstelle des Kaschiervorganges eine weitere Schicht in einer Extrusionsstation auf eine zuvor von einer Rolle abgewickelte Folie oder Folienverbund aufextrudiert wird.

In einer der Kaschier- oder Extrusionsstation nachfolgenden Druckstation wird der Folienverbund ein- oder beidseitig ein- oder mehrfarbig bedruckt. Die Druckstation kann in Substationen, das heisst in einzelne Druckeinheiten, aufgeteilt sein, in welchen einzelne Druckfarben nacheinander inline aufgebacht und zu einem Farbbild kombiniert werden.

Soll der Folienverbunden einen Konterdruck enthalten, so werden die Folien oder Folienverbunde in einer der Kaschierstation bzw. Extrusionsstation vorgeordneten Druckstation mit einem Konterdruck versehen.

Der bedruckte Folienverbund wird nachfolgend in der Siegellackstation einseitig voll- oder teilflächig mit einem Siegellack beschichtet. Die bedruckte Seite, welche vorzugsweise der gegenüberliegenden freien Seite entspricht, kann ferner volloder teilflächig mit einem Drucküberlack beschichtet werden. Die Siegellackstation kann überdies auch vor der Druckstation angeordnet sein.

Der Beschichtungseinheit der Drucküberlack- und/oder Siegellackstation ist bevorzugt eine Heiz-Einheit nachgeordnet, in welcher die Beschichtung, insbesondere die Pulverlackbeschichtung, unter Wärmeeinwirkung zu einem an der Folienoberfläche haftenden gleichmässigen Lackfilm aufgeschmolzen und nachfolgend wieder verfestigt oder gehärtet wird.

Der erfindungsgemäss hergestellte Folienverbund kann aus Monofolien oder mehrschichtigen Folien bzw. Folienverbunden hergestellt sein. Die Folien können z.B. aus Metall (Metallfolien, Metalldünnschichten), Papier, Kunststoff oder einer Kombination davon sein. Der Folienverbund kann Materialschichten aus Papier, Metall oder Kunststoff enthalten. Beispiele von Metallfolien als Verpackungswerkstoff sind Folien aus Eisen, Stahl, Kupfer und bevorzugt aus Aluminium und seinen Legierungen.

Geeignete Kunststoffe sind z.B. Polyvinylchlorid (PVC), Polyvinylidenchlorid (PVDC), Polyester, Polycarbonate, Polyvinylacetate, Polyolefine und besonders Polyethylene (PE), dann auch Polypropylene (PP) und Polyamide (PA). Weitere, hier nicht aufgeführte Kunststoffe sind ebenfalls denkbar.

Die Dicke des Verpackungsmaterials kann beispielsweise von 5 µm bis 1000 µm betragen. Zweckmässig sind Dicken von 15 bis 200 µm. Die Folien bzw. der Folienverbund kann auch Barriereschichten, z.B. keramische Dünnschichten, enthalten.

Die Erfindung betrifft auch eine Produktionsvorrichtung zur Herstellung eines mehrschichtigen Folienverbundes. Die erfindungsgemässe Produktionsvorrichtung umfasst eine Foliendurchlaufproduktionsanlage mit einem Abwickel- und Aufwickelsystem zum Ab- und Aufwickeln der als Rollenmaterial vorliegenden Folien.

Die Produktionsvorrichtung zeichnet sich dadurch aus, dass sie wenigstens eine Kaschier- und/oder Extrusionsstation zur Herstellung eines mehrschichtigen Folienverbundes, wenigstens eine Druckstation und wenigstens eine Siegellackstation enthält, und die einzelnen Stationen als integrale Module der Produktionsvorrichtung inline angeordnet sind, wobei die Druckstation und die Siegellackstation Mittel zur Beschichtung der Folien oder des Folienverbundes mittels eines elektrostatischen Beschichtungsverfahrens enthalten.

Die Mittel zur elektrostatischen Beschichtung enthalten zweckmässig Mittel zur elektrostatischen Aufladung der Beschichtungsteilchen und Mittel zum Transferieren der elektrostatisch geladenen Beschichtungsteilchen auf die zu beschichtende Folienoberfläche (Substrat).

Die Mittel zum Transferieren der elektrostatisch geladenen Beschichtungsteilchen umfassen vorzugsweise eine rotierbare Transferwalze oder Transferband, auf welche die elektrostatisch geladenen Beschichtungsteilchen mittels elektrostatischen Kräften aufgebracht werden, sowie Mittel zum Anlegen eines elektrischen Feldes zur Übertragung der elektrostatisch geladenen Beschichtungsteilchen von der Transferwalze oder Transferband auf die zu beschichtende Folienoberfläche.

Die Übertragung der Beschichtungsteilchen auf die Folienoberfläche geschieht bevorzugt mittels eines Verfahrens nach der sogenannten EMB-Technologie (Elektro-Magnetic Brush Technology), wie sie insbesondere bei Zweikomponenten-Entwicklersystem zum Einsatz kommt. Ein sogenannter Carrier besteht hier aus ferromagnetischen Teilchen, wobei die Beschichtungsteilchen durch triboelektrische Kräfte an den Carrier gebunden werden. Das aus dem Carrier und den daran haftenden Beschichtungsteilchen bestehende Entwickler-System wird über eine rotierende der Transferwalze oder Transferband gegenüberliegende Magnetwalze aufgetragen. Durch die zwischen der Magnetwalze und dem Carrier wirkenden magnetischen Kräfte wird das Entwickler-System kettenförmig an die Magnetwalze gezogen und bildet eine bürstenartige Anordnung, auch Magnetbürste genannt, aus. Die Magnetbürste überstreicht die Transferwalze und erzeugt einen sogenannter Bürsten-Effekt, durch welchen die Beschichtungsteilchen mit Hilfe elektrostatischer Kräfte auf die elektrisch geladene Oberfläche der Transferwalze überführt werden.

Im Übertragungsschritt werden die Beschichtungsteilchen, z. B. mittels Koronaentladungen, von der Transferwalze direkt oder indirekt auf das zu bedruckende Substrat transferiert. Die Beschichtungsteilchen werden anschliessend, gegebenenfalls im aufgeschmolzenen Zustand, an das Substrat fixiert. Je nach dem verwendeten Beschichtungssystem wird die Beschichtung in einer separaten Härtungsstation bzw. -einheiten gehärtet.

In den Beschichtungsstationen und insbesondere in jenen Beschichtungsstationen, bei welchen die Folienoberfläche gezielt teilflächig beschichtet wird, wird vorzugsweise ein elektrophotographisches Beschichtungsverfahren verwendet. In diesem Fall ist die Transferwalze zweckmässig als Phototräger ausgebildet und liegt vorzugsweise als Trommel, Walze oder Transferband vor. Der Phototräger ist an seiner Oberfläche mit einem Photoleiter beschichtet. An einer Koronaentladungsstation wird die photoleitende Oberflächenschicht des Phototrägers in Dunkelheit gleichmässig aufgeladen. Die photoleitende Schicht wird einer das Druckbild als Belichtungsmuster wiedergebenden Lichtquelle ausgesetzt, wobei der belichtete Teil der photoleitenden Schicht entladen wird. Ein dem Druckbild entsprechendes Ladungsbild entsteht.

Im Entwicklungsschritt werden die elektrostatisch geladenen Beschichtungsteilchen auf das Ladungsbild übertragen, wobei die der Ladung der photoleitenden Schicht entgegengesetzt geladenen Beschichtungsteilchen durch die wirkenden elektrostatischen Kräfte unter Wiedergabe des Druckbildes auf das Ladungsbild auf dem Phototräger gezogen werden. Die Beschichtungsteilchen werden hernach über elektrostatische Anziehung vom Phototräger direkt oder indirekt auf das Substrat übertragen.

Unter einem elektrophotographischen Verfahren fallen definitionsgemäss unter anderem direkte und indirekte elektrophotographische Verfahren, wie z.B. die Xerographie, wobei bevorzugt ein indirekters elektrophotographisches Verfahren, insbesondere ein Xerographie-Verfahren, angewendet wird.

Die Beschichtungsstationen enthalten bevorzugt Mittel zur elektronischen Datenverarbeitung zwecks Überwachung und/oder Steuerung eines teilflächigen Schichtauftrages und/oder zur Überwachung und/oder Steuerung der Schichtdicken. Insbesondere die Druckstation enthält zweckmässig Mittel zur Bildverarbeitung sowie Mittel zum gezielten teilflächigen Auftrag der Beschichtungsteilchen.

Die Bildverarbeitungsmittel umfassen bevorzugt Mittel zur elektronischen Datenverarbeitung (EDV), wie Bild- und/oder Textverarbeitungsprogrammen zur Herstellung von Bild und/oder Zeichenmuster in Form einer Druckvorlage. Die Druckvorlage liegt bevorzug in Digitalform vor.

Der Produktionsvorrichtung können fallweise noch weitere Verarbeitungseinheiten nachgeordnet sein. Die Produktionsvorrichtung kann z.B. eine nachgeordnete Schneidstation oder Vorrichtungen zur maschinellen Verpackung enthalten.

Der erfindungsgemäss hergestellte Folienverbund wird bevorzugt verwendet zur Herstellung von siegelbaren Verpackungen, insbesondere Beutelverpackungen, wie Flachbeutel, Bodenbeutel, Standbeutel, Tüten, Kissenverpackungen, Taschen, Säcke. Ferner kann der Folienverbund auch verwendet werden zur Herstellung von Warenträgern, Schachteln, Bodenteile von Durchdrückpackungen, Blisterpackungen oder Deckelmaterialien für Gefässe oder Warenträger.

Im folgenden wird die Erfindung beispielhaft und mit Bezug auf die beiliegenden Zeichnungen näher erläutert. Es zeigen:
- Fig. 1:: eine schematische Darstellung einer erfindungsgemässen Produktionsvorrichtung zur Herstellung eines Verpackungsmaterials;
- Fig. 2:: einen Querschnitt durch ein erfindungsgemäss hergestelltes Verpakkungsmaterial.

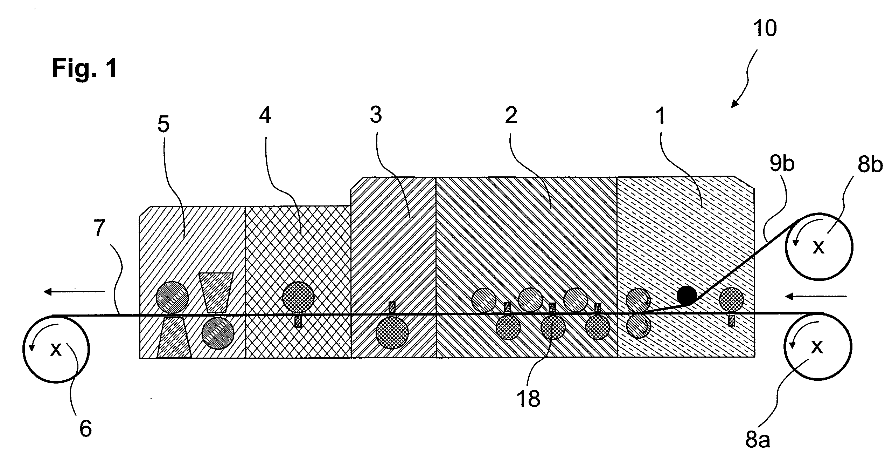

Die Produktionsvorrichtung 10 enthält eine Abwickelvorrichtung, eine Kaschierstation 1, eine Druckstation 2, eine Drucküberlackstation 3, eine Siegellackstation 4, eine Härtungsstation 5 und eine dieser nachgeordneten Aufwickelstation (siehe Fig. 1). Die Abwickelvorrichtung enthält zwei Folienrollen 8a, 8b, von welchen eine erste und zweite bahnförmige Folie oder Folienverbund 9a, 9b abgehaspelt und kontinuierlich der Kaschierstation 1 zugeführt werden. In der Kaschierstation 1 wird die erste Folie 9a mittels eines elektrostatischen, vorzugsweise elektrophotographischen Verfahrens, mit einem Klebstoff beschichtet, wobei der Klebstoff nach seinem Auftrag auf die Folienbahn zu einem Klebstofffilm aufgeschmolzen und die beiden Folien 9a, 9b anschliessend kaschiert werden.

Der Folienverbund wird nachfolgend durch eine Druckstation 2 geführt, in welcher mittels eines elektrophotographischen Verfahrens eine Bedruckung auf eine freie Oberfläche des Folienverbundes aufgebracht wird. Der Folienverbund kann auch beidseitig bedruckt werden. Die Bedruckung kann in einem oder mehreren Teilschritten mit einem oder mehreren Tonern mit unterschiedlicher Pigmentierung aufgetragen werden. Je nach Anzahl Druckschritte kann die Druckstation eine oder mehrere Druckeinheiten 18 enthalten.

Die auf die Folie aufgetragenen Tonerschichten werden an einer nachgeordneten Heiz-Station (nicht gezeigt) zu einem auf der Folienoberfläche haftenden Film geschmolzen und anschliessend verfestigt.

Im Anschluss an die Bedruckung wird der Folienverbund durch die der Druckstation 2 nachgeschalteten Drucküberlackstation 3 geführt. In dieser wird ein Drucküberlack voll- oder teilflächig auf die bedruckte Oberfläche des Folienverbundes aufgetragen.

An die Drucküberlackstation 3 schliesst die Siegellackstation 4 an, in welcher auf der der Bedruckung gegenüberliegenden freien Oberfläche eine Siegellackbeschichtung, insbesondere eine Heisssiegellackbeschichtung, teil- oder vollflächig aufgetragen wird.

Der Auftrag der Lackschichten an den beiden Lackierstationen 3, 4 geschieht mittels eines elektrostatischen, vorzugsweise elektrophotographischen Verfahrens. Den Lackierstationen 3, 4 sind ferner jeweils Heizeinheiten (nicht gezeigt) zugeordnet, in welchen die Lackbeschichtung zu einem auf der Folienoberfläche haftenden Lackfilm geschmolzen und anschliessend verfestigt wird.

Die Klebstoffschicht, die Bedruckung sowie die Drucküberlackbeschichtung sind mittels UV- oder EB-Strahlung härtende Beschichtungen und werden im Anschluss an die Beschichtungsschritte an einer gemeinsamen Härtungsstation 5 mittels UVoder Elektronenstrahlung gehärtet.

Der fertige Folienverbund 7 wird anschliessend zur weiteren Verarbeitung wieder auf eine Folienrolle 6 aufgehaspelt.

In geänderter Ausführung des Beispiels kann jede Beschichtungsstation an Stelle einer gemeinsamen Härtungsstation 5 jeweils eine Härtungseinheit enthalten, so dass jede aufgetragene Schicht einzeln mittels UV- oder Elektronenstrahlung gehärtet wird.

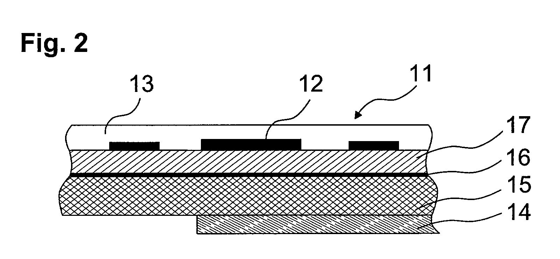

Ein mittels erfindungsgemässen Verfahren hergestellter Folienverbund 11 gemäss Fig. 2 enthält eine erste Folie 15 und eine zweite Folie 17, welche gegenseitig über eine Klebstoffschicht 16 kaschiert sind. Auf einer ersten freien Oberfläche des Folienverbundes 11 ist eine Bedruckung 12 aufgebracht. Über die Bedruckung ist ein Drucküberlack 13 aufgetragen.

Auf der der Bedruckung 12 gegenüber liegenden freien Oberfläche des Folienverbundes 11 ist eine Siegellackschicht 14 aufgetragen. Die Siegellackschicht 14 kann partiell an den eigentlichen Siegelflächen oder vollflächig auf dem gesamten Folienverbund 11 aufgetragen sein.

## Patentansprüche

1. Verfahren zur Herstellung eines Verpackungsmaterials aus einem flexiblen, mehrschichtigen Folienverbund, enthaltend die Verfahrensschritte: Herstellung des Folienverbundes aus mehreren Folien oder Schichten mittels eines Kaschier- und/oder Extrusionsprozesses, Bedruckung der Folien oder des Folienverbundes sowie Beschichtung wenigstens einer freiliegenden Oberfläche des Folienverbundes mit einem Siegellack,
**dadurch gekennzeichnet, dass**
der Kaschierprozess und/oder der Extrusionsprozess, die Bedruckung (12) und die Siegellackbeschichtung (14) inline an einzelnen Stationen einer gemeinsamen Produktionsvorrichtung (10) erfolgen, wobei die Bedruckung (12) und die Siegellackbeschichtung (14) an Beschichtungsstationen (2, 4) mittels eines elektrostatischen Beschichtungsverfahrens erfolgen, in welchem Beschichtungsteilchen elektrostatisch geladen und mittels Transfermitteln durch Anlegen eines elektrischen Feldes auf die zu beschichtende Folienoberfläche übertragen und zu einem Beschichtungsfilm aufgeschmolzen und/oder gehärtet werden.

2. Verfahren nach Anspruch 1, **dadurch gekennzeichnet, dass** der flexible Folienverbund aus zwei oder mehreren Folien hergestellt wird, wobei wenigstens zwei Folien gegenseitig zu einem Folienverbund kaschiert werden und die Kaschierung an einer Kaschierstation (1) der Produktionsvorrichtung (10) mittels eines elektrostatischen Beschichtungsverfahrens erfolgt, in welchem Beschichtungsteilchen elektrostatisch geladen und mittels Transfermitteln durch Anlegen eines elektrischen Feldes auf die zu beschichtende Folienoberfläche übertragen und zu einem Beschichtungsfilm aufgeschmolzen und/oder gehärtet werden.

3. Verfahren nach einem der Ansprüche 1 bis 2, **dadurch gekennzeichnet, dass** die freiliegende Oberfläche des mehrschichtigen Folienverbundes bedruckt wird und die Produktionsvorrichtung (10) eine Drucküberlackstation enthält und auf die auf der frei liegenden Oberfläche des Folienverbundes aufgebrachte Bedruckung ein transparenter oder durchscheinender Drucküberlack aufgebracht wird, wobei der Drucküberlack mittels eines elektrostatischen Beschichtungsverfahrens aufgebracht wird, in welchem Beschichtungsteilchen elektrostatisch geladen und mittels Transfermitteln durch Anlegen eines elektrischen Feldes auf die zu beschichtende Folienoberfläche übertragen und zu einem Beschichtungsfilm aufgeschmolzen und/oder gehärtet werden.

4. Verfahren nach einem der Ansprüche 1 bis 3, **dadurch gekennzeichnet, dass** die Kaschier-Beschichtung, die Bedruckung, die Drucküberlackbeschichtung und/oder die Siegellackbeschichtung in den dazugehörigen Beschichtungsstationen ausgehärtet werden.

5. Verfahren nach einem der Ansprüche 1 bis 3, **dadurch gekennzeichnet, dass** die Härtung der Kaschier-Beschichtung, der Bedruckung, der Drucküberlackbeschichtung und/oder der Siegellackbeschichtung inline an einer gemeinsamen, den Beschichtungsstationen (1, 2, 3, 4) nachgeordneten Härtungsstation (5) der Produktionsvorrichtung (10) erfolgt.

6. Verfahren nach einem der Ansprüche 1 bis 5, **dadurch gekennzeichnet, dass** die Kaschier-Beschichtung, die Bedruckung, die Drucküberlackbeschichtung und/oder die Siegellackbeschichtung mittels Strahlung, vorzugsweise mittels UV- oder EB-Strahlung, härtende Beschichtungs-Systeme sind.

7. Verfahren nach einem der Ansprüche 1 bis 6, **dadurch gekennzeichnet, dass** die Beschichtungen an der Kaschierstation (1), der Druckstation (2), der Drucküberlackstation (3) und/oder der Siegellackstation (4) mittels eines EMB-Verfahrens unter Verwendung eines Zweikomponenten-Entwicklersystems erfolgen.

8. Verfahren nach einem der Ansprüche 1 bis 7, **dadurch gekennzeichnet, dass** die Beschichtungen an der Kaschierstation (1), der Druckstation (2), der Drucküberlackstation (3) und/oder der Siegellackstation (4) mittels eines elektrophotographischen Verfahrens erfolgen.

9. Verfahren nach einem der Ansprüche 1 bis 8, **dadurch gekennzeichnet, dass** die Beschichtungsteilchen der Druckstation (2) Trocken- oder Flüssig-Tonerteilchen sind und die Tonerteilchen unter Einsatz von elektronischen Datenverarbeitungsmitteln, wie Bildverarbeitungsmitteln, unter Ausbildung eines Druckbildes teilflächig auf die Folien aufgetragen werden.

10. Verfahren nach einem der Ansprüche 1 bis 9, **dadurch gekennzeichnet, dass** die Beschichtungsteilchen des Drucküberlackes (13) und/oder der Siegellackbeschichtung (14) in Form eines Pulverlacks vorliegen.

11. Verfahren nach einem der Ansprüche 1 bis 10, **dadurch gekennzeichnet, dass** die Siegellackbeschichtung (14) ein Kalt- oder Heisssiegellack ist.

12. Verfahren nach einem der Ansprüche 1 bis 11, **dadurch gekennzeichnet, dass** die Siegellackbeschichtung (14) unter Verwendung von elektronischen Datenverarbeitungsmitteln teilflächig auf den zu siegelnden Flächenabschnitten des Verpackungsmaterials aufgetragen wird.

13. Verfahren nach einem der Ansprüche 1 bis 12, **dadurch gekennzeichnet, dass** die Drucküberlackbeschichtung (13) unter Verwendung von elektronischen Datenverarbeitungsmitteln teilflächig auf den bedruckten Flächenabschnitten des Verpackungsmaterials aufgetragen wird.

14. Verfahren nach einem der Ansprüche 1 bis 13, **dadurch gekennzeichnet, dass** die aufzutragenden Schichtdicken der Kaschierschicht, des Drucküberlackes und/oder der Siegelschicht durch Mittel zur elektronische Datenverarbeitung gesteuert werden.

15. Produktionsvorrichtung (10) zur Herstellung eines mehrschichtigen Folienverbundes gemäss dem Verfahren nach einem der Ansprüche 1 bis 14, wobei die Produktionsvorrichtung (10) eine Foliendurchlaufproduktionsanlage mit einem Abwickel- und Aufwickelsystem zum Ab- und Aufwickeln der als Rollenmaterial vorliegenden Folien oder Folienverbunde (9a,9b,7) umfasst,
**dadurch gekennzeichnet, dass**
die Produktionsvorrichtung (10) wenigstens eine Kaschier- (1) und/oder Extrusionsstation zur Herstellung eines mehrschichtigen Folienverbundes, wenigstens eine Druckstation (2) und wenigstens eine Siegellackstation (4) enthält, und die einzelnen Stationen als integrale Module der Produktionsvorrichtung (10) inline angeordnet sind, wobei die Druckstation (2) und die Siegellackstation (4) Mittel zur Beschichtung der Folien oder des Folienverbundes mittels eines elektrostatischen Beschichtungsverfahrens enthalten.

16. Vorrichtung nach Anspruch 15, **dadurch gekennzeichnet, dass** die Produktionsvorrichtung eine Kaschierstation (1) enthält und die Kaschierstation (1) Mittel zur Beschichtung der Folien mittels eines elektrostatischen Beschichtungsverfahrens enthält.

17. Vorrichtung nach einem der Ansprüche 15 bis 16, **dadurch gekennzeichnet, dass** die Mittel zur elektrostatischen Beschichtung Mittel zur elektrostatischen Aufladung von Beschichtungsteilchen und Mittel zum Transferieren der elektrostatisch geladenen Beschichtungsteilchen auf die zu beschichtende Folienoberfläche enthalten.

18. Vorrichtung nach Anspruch 17, **dadurch gekennzeichnet, dass** die Mittel zum Transferieren der elektrostatisch geladenen Beschichtungsteilchen eine Transferwalze oder ein Transferband, auf welche die elektrostatisch geladenen Beschichtungsteilchen mittels elektrostatischen Kräften aufgebracht werden, und Mittel zum Anlegen eines elektrischen Feldes zur Übertragung der elektrostatisch geladenen Beschichtungsteilchen von der Transferwalze oder Transferband auf die zu beschichtende Folienoberfläche enthalten.

19. Vorrichtung nach einem der Ansprüche 15 bis 18, **dadurch gekennzeichnet, dass** der Kaschierstation (1), der Druckstation (2), der Drucküberlackstation (3) und/oder der Siegellackstation (4) Mittel zur elektronischen Datenverarbeitung zum gezielten Auftrag und Steuerung eines teilflächigen Schichtauftrages und/oder zur Steuerung der Schichtdicken zugeordnet sind.

20. Vorrichtung nach einem der Ansprüche 15 bis 19, **dadurch gekennzeichnet, dass** die Beschichtungsteilchen der Druckstation (2) ein Fest- oder Flüssigtoner ist, und der Druckstation (2) Mittel zur Bildverarbeitung und Mittel zum gezielten teilflächigen Auftrag des Toners in Form eines Druckbildes zugeordnet sind.

21. Vorrichtung nach einem der Ansprüche 15 bis 20, **dadurch gekennzeichnet, dass** der Drucküberlackstation (3) und/oder der Siegellackstation (4) Mittel zur Bildverarbeitung und Mittel zum gezielten teilflächigen Auftrag von Beschichtungsteilchen zugeordnet sind.

22. Vorrichtung nach einem der Ansprüche 20 bis 21, **dadurch gekennzeichnet, dass** die Bildverarbeitungsmittel Mittel zur elektronischen Datenverarbeitung (EDV), wie Bild- und/oder Textverarbeitungsprogramme zur Herstellung von Bild und/oder Zeichenmuster in Form einer Druckvorlage enthält, wobei die Daten der Druckvorlage in digitaler Form vorliegen und die Beschichtungsstationen (2, 3, 4) Mittel zur Beschichtung der Folien oder Folienverbundes mittels eines elektrophotographischen Verfahrens enthalten.

23. Vorrichtung nach einem der Ansprüche 15 bis 22, **dadurch gekennzeichnet, dass** die Kaschierstation (1), die Druckstation (2), die Drucküberlackstation (3) und/oder die Siegellackstation (4) jeweils eine Heizeinheit zum Aufschmelzen der Beschichtung enthalten.

24. Vorrichtung nach einem der Ansprüche 15 bis 23, **dadurch gekennzeichnet, dass** die Kaschierstation (1), die Druckstation (2), die Drucküberlackstation (3) und/oder die Siegellackstation (4) jeweils eine Härtungseinheit zum Aushärten der Beschichtung enthalten.

25. Vorrichtung nach einem der Ansprüche 15 bis 23, **dadurch gekennzeichnet, dass** die Produktionsvorrichtung (10) eine den Beschichtungsstationen (1, 2, 3, 4) nachgeordnete gemeinsame Härtungsstation (5) enthält.

26. Vorrichtung nach einem der Ansprüche 24 bis 25, **dadurch gekennzeichnet, dass** die Härtungsstation (5) oder Härtungseinheiten mit UV-, oder EB-Strahlung arbeiten.

27. Verwendung eines Folienverbundes (7) hergestellt nach dem Verfahren gemäss Anspruch 1, zur Herstellung von siegelbaren Verpackungen, insbesondere Beutelverpackungen, wie Flachbeutel, Bodenbeutel, Standbeutel, Tüten, Kissenverpackungen, Taschen, Säcke, Warenträger, Schachteln, Bodenteile von Durchdrückpackungen, Blisterpackungen, Deckelmaterialien für Gefässe oder Warenträger.
